# EUROPEAN PATENT SPECIFICATION

(11) **EP 3 598 092 B1**
(45) Date of publication and mention of the grant of the patent: **20.04.2022**
(21) Application number: 17900470.0
(22) Date of filing: 13.03.2017
(51) Int. Cl.: G01K 15/00, G01K 3/00

(54) **TEMPERATURE DETECTION CIRCUIT**
TEMPERATURERFASSUNGSSCHALTUNG
CIRCUIT DE DÉTECTION DE TEMPÉRATURE

(43) Date of publication of application: 22.01.2020
(73) Proprietor: Kabushiki Kaisha Toshiba, Minato-ku Tokyo 105-0023 (JP)
(72) Inventor: SAEKI, Yosuke, Tokyo 105-0023 (JP); KURODA, Kazuto, Tokyo 105-0023 (JP); TAKAHASHI, Jun, Kanagawa 212-0013 (JP); NOZAWA, Ryo, Tokyo 105-0023 (JP); SEKINO, Masahiro, Tokyo 105-0023 (JP)
(74) Representative: AWA Sweden AB
(86) International application number: PCT/JP2017/009898
(87) International publication number: WO 2018/167812

(56) References cited:
- JP-A- H09 243 467
- JP-A- 2001 091 367
- JP-A- 2004 108 987
- JP-A- 2008 039 451
- US-A1- 2005 150 968
- US-A1- 2010 158 068

## Description

### FIELD

Embodiments of the present invention relate generally to a temperature detection circuit.

### BACKGROUND

Thermostats are connected to a microprocessor, for example, in wired OR connection for signal input through diodes or transistors, for example. After mounting the thermostats and other components on a substrate, it is necessary to check the soundness of each of the thermostats. Checking methods may include checking the operation of the thermostats by providing the outputs of the thermostats with test pins such as voltage detection terminals, individually applying heat to or cooling the thermostats, and detecting voltages of the test pins. A system and method for checking whether a plurality of thermostats operate correctly is disclosed in US 2010/158068 A1.

However, this checking method involves individually heating or cooling thermostats to check the outputs from the thermostats, which may increase test time. In addition, in the case of heating the thermostats to test them concurrently and detecting anomaly in temperature of all the thermostats, the operation of each diode or transistor cannot be checked by checking outputs from the thermostats or inputs to the microprocessor using voltage detection terminals. Thus, an object of the present invention is to provide a temperature detection circuit that shortens test time and enables the operational check of diodes, transistors, and other components, for example.

According to the invention, a temperature detection circuit includes a plurality of thermostats configured to change a level of signals to output, upon detecting an anomaly in temperature; a microprocessor configured to receive signals from the thermostats; a plurality of circuits that connect between the thermostats and the microprocessor; a connection point at which the circuits connect to each other; resistors included in respective circuits that connect between the connection point and the thermostats; and voltage detection terminals respectively included in circuits that connect between the resistors and the thermostats, a circuit that connects between the connection point and at least one of the resistors, and a circuit that connects between the connection point and the microprocessor.

### BRIEF DESCRIPTION OF DRAWINGS

FIG. 1 is a temperature detection circuit according to a first embodiment; and
FIG. 2 is a temperature detection circuit according to a second embodiment.

### DESCRIPTION OF EMBODIMENTS

The following describes embodiments with reference to the accompanying drawings.

### First Embodiment

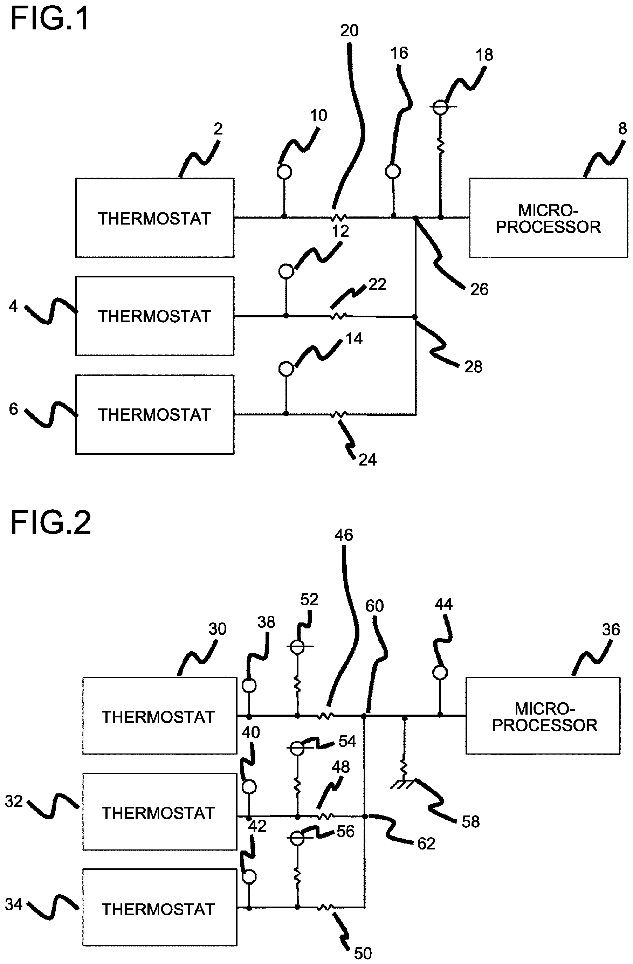

FIG. 1 is a temperature detection circuit according to an embodiment.

The temperature detection circuit according to the present embodiment includes a plurality of thermostats, a microprocessor, circuits that connect between the thermostats and the microprocessor, and resistors and voltage detection terminals in the circuits.

The thermostats are configured to detect temperature of a battery, for example. Upon detecting a temperature equal to or higher than a certain temperature, or equal to or lower than a certain temperature, the thermostats each transmit a low level output or a drain signal.

The thermostats are electrically connected to a microprocessor 8. The microprocessor 8 is configured to receive signals from the thermostats. The microprocessor 8 receives signals containing temperature information, for example, to perform current control of batteries or other operations.

The circuits that connect between the thermostats and the microprocessor 8 are integrated to one circuit via one or more connection points, and the one circuit is connected to the microprocessor 8.

The circuits connecting between the thermostats and the connection points include resistors. In the circuits in FIG. 1 for example, the circuit connecting between a thermostat 2 and a connection point 26 includes a resistor 20, the circuit connecting between a thermostat 4 and a connection point 28 includes a resistor 22, and the circuit connecting between a thermostat 6 and the connection point 28 includes a resistor 24.

The respective circuits connecting between the thermostats and the resistors include voltage detection terminals configured to detect voltage. The circuit connecting between at least one resistor and a connection point includes a voltage detection terminal. In the circuits in FIG. 1 for example, the circuit connecting between the thermostat 2 and the resistor 20 includes a voltage detection terminal 10, the circuit connecting between the thermostat 4 and the resistor 22 includes a voltage detection terminal 12, and the circuit connecting between the thermostat 6 and the resistor 24 includes a voltage detection terminal 14. The circuit connecting between a resistor 20 and the connection point 26 includes a voltage detection terminal 16.

For checking the soundness of the thermostats with the circuits having such a configuration, the temperature of all the thermostats is raised or lowered. When detecting a temperature equal to or higher than a certain temperature, or equal to or lower than a certain temperature, all the thermostats output low level outputs or drain signals if they are operating normally.

In such a case, the thermostat 2 transmits a low level output or a drain signal, and thus the voltage detection terminal 10 and the voltage detection terminal 16 measure voltages to determine a certain potential difference. In this manner, the normal operation of the thermostat 2 can be determined. Likewise, the voltage detection terminal 12 and the voltage detection terminal 16 measure the difference in voltage to be able to check whether the thermostat 4 is normally operating. If the thermostat 6 is not operating normally and not transmitting a low level output or a drain signal, a certain potential difference will not occur between the voltage detection terminal 14 and the voltage detection terminal 16. Thus, malfunction of the thermostat 6 can be detected.

As described above, the soundness of thermostats can be checked by circuits configurable of resistors alone. Resistors are inexpensive parts, which enables reduction in parts unit cost. This further makes it possible to attain a circuit configuration with a less number of parts and elements than the one including diodes or transistors.

In addition, if the resistor 20 has a failure and is OPEN, for example, it is possible to detect malfunction of the resistor 20 by measuring voltages to measure an anomaly in voltage using the voltage detection terminal 10 and the voltage detection terminal 16.

In this manner, a failure of resistors as circuit elements can easily be detected.

Although FIG. 1 illustrates circuits that connect between three thermostats and one microprocessor, the number of thermostats is not limited to three, and can be changed as appropriate. To change the number of thermostats, resistors and voltage detection terminals may be added in the same manner as in the configuration illustrated in FIG. 1. Thereby, the same or similar effects as those of the circuits in FIG. 1 can be attained.

### Second Embodiment

FIG. 2 is a temperature detection circuit according to an embodiment.

The temperature detection circuit according to the embodiment includes a plurality of thermostats, a microprocessor, and circuits that connect between the thermostats and the microprocessor, and resistors and voltage detection terminals included in the circuits.

A thermostat 30, a thermostat 32, and a thermostat 34 are configured to detect temperature of a battery, for example. When detecting a temperature equal to or higher than a certain temperature, or equal to or lower than a certain temperature, the thermostats each transmit a high level output or an open signal.

The thermostats are electrically connected to a microprocessor 36. The microprocessor 36 is configured to receive signals from the thermostats. The microprocessor 36 receives signals containing temperature information, for example, to perform current control of batteries or other operations.

The circuits that connect between the thermostats and the microprocessor 36 are integrated to one circuit via one or more connection points, and the one circuit is connected to the microprocessor 36.

The circuits that connect between the thermostats and the connection points include resistors. In the circuits in FIG. 2 for example, the circuit connecting between a thermostat 30 and a connection point 60 includes a resistor 46, the circuit connecting between a thermostat 32 and a connection point 62 includes a resistor 48, and the circuit connecting between a thermostat 34 and the connection point 62 includes a resistor 50.

In addition, the respective circuits connecting between the thermostats and the resistors include voltage detection terminals configured to detect voltage. The circuit connecting between at least one resistor and a connection point includes a voltage detection terminal. In the circuits in FIG. 2, for example, the circuit connecting between the thermostat 30 and the resistor 46 includes a voltage detection terminal 38, the circuit connecting between the thermostat 32 and the resistor 48 includes a voltage detection terminal 40, and the circuit connecting between the thermostat 34 and the resistor 50 includes a voltage detection terminal 42. The circuit connecting between the connection point 60 and the microprocessor 36 includes a voltage detection terminal 44.

The circuit connecting between the connection point 60 and the voltage detection terminal 44 further includes a grounding terminal 58.

For checking the soundness of the thermostats with the circuits having such a configuration, the temperature of all the thermostats is raised or lowered. When detecting a temperature equal to or higher than a certain temperature, or equal to or lower than a certain temperature, all the thermostats output high level outputs or open signals if they are operating normally.

In such a case, the thermostat 30 transmits a high level output or an open signal, and thus the voltage detection terminal 38 and the voltage detection terminal 44 measure voltages to determine a certain potential difference. In this manner, the normal operation of the thermostat 30 can be determined. Likewise, the voltage detection terminal 40 and the voltage detection terminal 44 measure the difference in voltage to be able to check whether the thermostat 32 is normally operating. If the thermostat 34 is not operating normally and not transmitting a high level output or an open signal, certain potential difference will not occur between the voltage detection terminal 42 and the voltage detection terminal 44. Thereby, malfunction of the thermostat 34 can be detected.

As described above, the soundness of thermostats can be checked by circuits configurable of resistors alone. Resistors are inexpensive parts, thus enabling reduction in parts unit cost. This further makes it possible to attain a circuit configuration with a less number of parts and elements than the one including diodes or transistors.

In addition, if the resistor 46 has a failure and is OPEN, for example, it is possible to detect malfunction of the resistor 46 by measuring voltages so as to measure an anomaly in voltage, using the voltage detection terminal 38 and the voltage detection terminal 44.

In this manner, a failure of resistors as circuit elements can easily be detected.

## Claims

1. A temperature detection circuit comprising:
a plurality of thermostats (2, 4, 6, 30, 32, 34) configured to change a level of signals to output, upon detecting an anomaly in temperature;
a microprocessor (8, 36) configured to receive signals from the thermostats (2, 4, 6, 30, 32, 34);
a plurality of circuits that connects between the thermostats (2, 4, 6, 30, 32, 34) and the microprocessor (8, 36) ;
a connection point (26, 28, 60, 62) at which the circuits connect to each other;
resistors (20, 22, 24, 46, 48, 50) in respective circuits that connect between the connection point (26, 28, 60, 62) and the thermostats (2, 4, 6, 30, 32, 34); and
voltage detection terminals (10, 12, 14, 16, 38, 40, 42, 44) included respectively in circuits that connect between the resistors (20, 22, 24, 46, 48, 50) and the thermostats (2, 4, 6, 30, 32, 34), a circuit that connects between the connection point (26, 28, 60, 62) and at least one of the resistors, and a circuit that connects between the connection point and the microprocessor (8, 36).

2. The temperature detection circuit according to claim 1, wherein
the thermostats (2, 4, 6, 30, 32, 34) output low level outputs or drain signals upon detecting an anomaly in temperature.

3. The temperature detection circuit according to claim 1, further comprising
a grounding terminal (58) in a circuit that connects between the connection point (60) and the voltage detection terminal (44) of the circuit connecting between the connection point and the microprocessor (8, 36).

4. The temperature detection circuit according to claim 3, wherein
the thermostats (2, 4, 6, 30, 32, 34) output low level outputs or drain signals upon detecting an anomaly in temperature.

## Patentansprüche

1. Temperaturerfassungsschaltung, die umfasst:
mehrere Thermostate (2, 4, 6, 30, 32, 34), die dazu ausgestaltet sind, beim Erfassen einer Anomalie bei der Temperatur einen Pegel von auszugebenden Signalen zu ändern;
einen Mikroprozessor (8, 36), der dazu ausgestaltet ist, Signale von den Thermostaten (2, 4, 6, 30, 32, 34) zu empfangen;
mehrere Schaltungen, die die Thermostate (2, 4, 6, 30, 32, 34) und den Mikroprozessor (8, 36) miteinander verbinden;
einen Verbindungspunkt (26, 28, 60, 62), an dem die Schaltungen miteinander verbunden sind;
Widerstände (20, 22, 24, 46, 48, 50) in entsprechenden Schaltungen, die den Verbindungspunkt (26, 28, 60, 62) und die Thermostate (2, 4, 6, 30, 32, 34) miteinander verbinden; und
Spannungserfassungsanschlüsse (10, 12, 14, 16, 38, 40, 42, 44), die in Schaltungen, welche die Widerstände (20, 22, 24, 46, 48, 50) und die Thermostate (2, 4, 6, 30, 32, 34) miteinander verbinden, einer Schaltung, die den Verbindungspunkt (26, 28, 60, 62) und mindestens einen der Widerstände verbindet, beziehungsweise einer Schaltung enthalten sind, die den Verbindungspunkt und den Mikroprozessor (8, 36) verbindet.

2. Temperaturerfassungsschaltung nach Anspruch 1, wobei
die Thermostate (2, 4, 6, 30, 32, 34) bei der Erfassung einer Anomalie bei der Temperatur Ausgänge mit niedrigem Pegel oder Drain-Signale ausgeben.

3. Temperaturerfassungsschaltung nach Anspruch 1, die ferner umfasst:
einen Erdungsanschluss (58) in einer Schaltung, die den Verbindungspunkt (60) und den Spannungserfassungsanschluss (44) der Schaltung miteinander verbindet, die den Verbindungspunkt und den Mikroprozessor (8, 36) miteinander verbindet.

4. Temperaturerfassungsschaltung nach Anspruch 3, wobei
die Thermostate (2, 4, 6, 30, 32, 34) beim Erfassen einer Anomalie bei der Temperatur Ausgänge mit niedrigem Pegel oder Drain-Signale ausgeben.

## Revendications

1. Circuit de détection de température comprenant :
une pluralité de thermostats (2, 4, 6, 30, 32, 34) configurés pour changer un niveau de signaux à délivrer, à la détection d'une anomalie de température ;
un microprocesseur (8, 36) configuré pour recevoir des signaux depuis les thermostats (2, 4, 6, 30, 32, 34) ;
une pluralité de circuits reliant les thermostats (2, 4, 6, 30, 32, 34) au microprocesseur (8, 36) ;
un point de liaison (26, 28, 60, 62) auquel les circuits sont reliés l'un à l'autre ;
des résistances (20, 22, 24, 46, 48, 50) dans des circuits respectifs qui relient le point de liaison (26, 28, 60, 62) aux thermostats (2, 4, 6, 30, 32, 34) ; et
des bornes de détection de tension (10, 12, 14, 16, 38, 40, 42, 44) incluses respectivement dans des circuits qui relient les résistances (20, 22, 24, 46, 48, 50) aux thermostats (2, 4, 6, 30, 32, 34), un circuit qui relie le point de liaison (26, 28, 60, 62) à au moins l'une des résistances, et un circuit qui relie le point de liaison au microprocesseur (8, 36).

2. Circuit de détection de température selon la revendication 1, dans lequel
les thermostats (2, 4, 6, 30, 32, 34) délivrent des sorties de bas niveau ou des signaux de drain à la détection d'une anomalie de température.

3. Circuit de détection de température selon la revendication 1, comprenant en outre
une borne de masse (58) dans un circuit qui relie le point de liaison (60) à la borne de détection de tension (44) du circuit reliant le point de liaison au microprocesseur (8, 36).

4. Circuit de détection de température selon la revendication 3, dans lequel
les thermostats (2, 4, 6, 30, 32, 34) délivrent des sorties de bas niveau ou des signaux de drain à la détection d'une anomalie de température.
